Europäisches Patentamt

European Patent Office

Office européen des brevets

(19)

(11) Publication number: **0 484 183 B1**

(12) **EUROPEAN PATENT SPECIFICATION**

(45) Date of publication of patent specification: **27.09.95**　(51) Int. Cl.⁶: **B29C  67/00**, B29C 39/42

(21) Application number: **91310138.2**

(22) Date of filing: **01.11.91**

(54) **Photo-solidification modelling device.**

(30) Priority: **02.11.90 JP 297535/90**

(43) Date of publication of application:
   **06.05.92 Bulletin  92/19**

(45) Publication of the grant of the patent:
   **27.09.95 Bulletin  95/39**

(84) Designated Contracting States:
   **DE FR GB**

(56) References cited:
   **EP-A- 0 388 129**
   **EP-A- 0 406 513**
   **EP-A- 0 429 196**
   **WO-A-89/10256**

   **PATENT ABSTRACTS OF JAPAN vol. 10, no.
   301 (M-525)(2357) 14 October 1986 & JP-A-61
   114 818 (FUJITSU LTD) 2 June 1986**

(73) Proprietor: **MITSUBISHI CORPORATION
6-3, Marunouchi 2-chome
Chiyoda-ku
Tokyo 100 (JP)**

(72) Inventor: **Saito, Naoichiro, c/o Mitsubishi Cor-
poration
6-3 Marunouchi 2-chome
Chiyoda-ku,
Tokyo-to (JP)**
Inventor: **Hayano, Seiji, c/o Mitsubishi Cor-
poration
6-3 Marunouchi 2-chome
Chiyoda-ku,
Tokyo-to (JP)**

(74) Representative: **Bannerman, David Gardner et
al
Withers & Rogers
60 Holly Walk
Leamington Spa
Warwickshire CV32 4JE (GB)**

Rank Xerox (UK) Business Services
(3.10/3.09/3.3.3)

**Description**

The present invention relates to an improvement in a photo-solidification modeling device for forming a solid representation having a desired model shape by exposing to light a liquid capable of being solidified when exposed to the light in a region corresponding to the desired model shape.

In recent years, there has been widely used a three-dimensional CAD for designing a three-dimensional shape with use of a computer and a three-dimensional measuring instrument such as a continuous tomographic system. It is becoming increasingly helpful to confirm directly and visually the three-dimensional shape on the basis of data relating to the three-dimensional shape created or measured by these systems. It is also increasingly necessary to easily fabricate a model having the three-dimensional shape in a short time on the basis of the above data.

Some previous techniques to satisfy these demands are disclosed in U.S. Patent No. 2,795,758 and Japanese Laid-open Patent Publication No. 56-144478.

According to the known techniques, there is provided a photo-solidification modeling device for forming a solidified image having a desired model shape by exposing to light a liquid capable of being solidified upon exposure to the light in a region corresponding to the desired model shape. In each technique, the solidified image is modeled as follows:

(1) A surface of the liquid is exposed to light in a region corresponding to one section of the desired model shape to form a section solidified image corresponding to this one section;

(2) Liquid for use in forming a further section is introduced onto the previously solidified image;

(3) A new surface of the liquid is exposed to light in a region corresponding to this further section to form a new solidified section on the previously solidified section; and

(4) The above steps are repeated for all the other sections to fabricate a three-dimensional solidified image as a laminated section solidified image.

As another technique, there has been proposed in Japanese Laid-open Patent Publication No. 60-247515 a technique of immersing a tip of an optical fiber into the liquid and moving the tip in the liquid in X, Y, and Z directions to thereby expose a region corresponding to the desired model shape to light.

A model to be fabricated by the conventional photo-solidification modeling device is a solid model like that to be fabricated by other modeling methods such as cutting or plastic working.

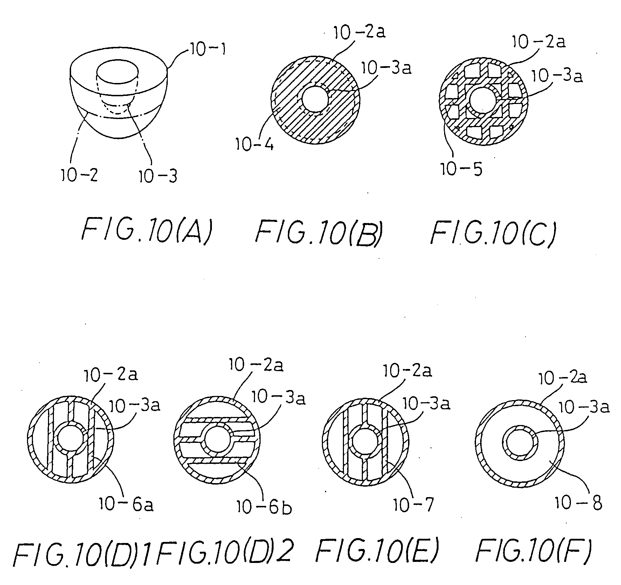

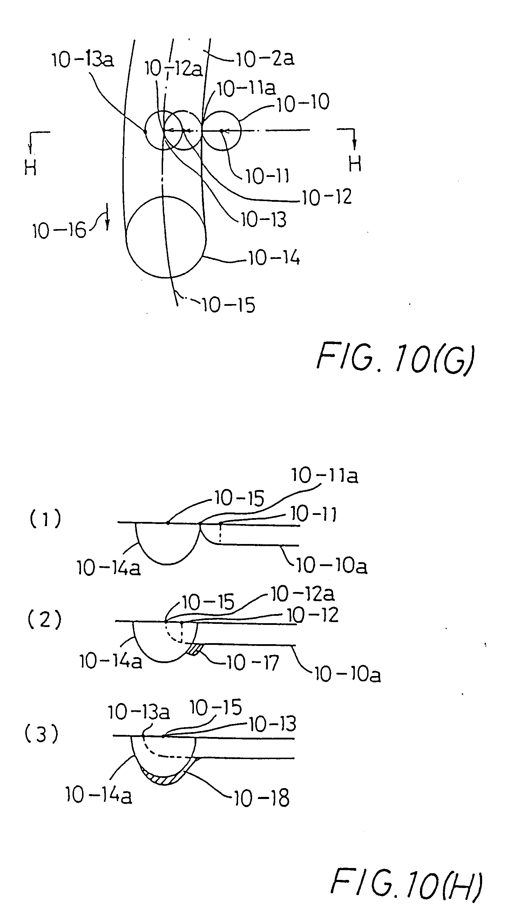

For instance, in the case of fabricating a thick-walled cup-shaped model as shown in Fig. 10(A), the conventional photo-solidification modeling device fabricates a solid model such as shown in Fig. 10(B). Fig. 10(B) shows a horizontal section, wherein a thick-walled portion of the cup-shaped model is filled.

However, in the case where it is sufficient to obtain an accurate shape of the model, such a solid model is not necessary to be fabricated. In some circumstances, an hollow model such as shown in Fig. 10(F) is required. Fig. 10(F) shows a horizontal section, wherein an outer wall 10-2a and an inner wall 10-3a are solidified with a vacancy 10-8 defined therebetween. Further, there is another case that a honeycomb model such as shown in Figs. 10(C) to 10(E) is required. Figs. 10(C) to 10(E) show horizontal sections similar to Fig. 10(F), wherein the outer wall 10-2a and the inner wall 10-3a are solidified and connected together by a honeycomb reinforcement 10-5, 10-6a, 10-6b or 10-7.

The conventional method does not consider such a circumstance but intends to fabricate a solid model only. Accordingly, an exposure time is wasted, and a liquid quantity to be used is increased.

EP-A-0388129 discloses a photo-solidification modelling device for forming solidified image having a desired model shape by exposing to light a liquid capable of being solidified upon exposure to light in a region corresponding to the desired model shape.

EP-A-0429196 discloses methods for photo-solidification modelling including the formation of skins on models produced by such methods.

EP-A-0406513 discloses a method for photo-solidification modelling involving the use of different diameter beams of light for such modelling depending on the level of detail required.

WO-A-89/10256 discloses a photo-solidification modelling device for forming a solidified image, and CAD/CAM data conversion algorithms useful for providing data for such a device.

It is accordingly an object of the present invention to provide a photo-solidification modelling device which more accurately defines the model shape and means to fill the model shape if required.

According to the present invention, there is provided a photo-solidification modeling device for forming a solidified image having a desired model shape by exposing to light a liquid capable of being solidified upon exposure to the light in a region corresponding to the desired model shape, characterised by first means for computing a position of a contour of said desired model shape and specifying an exposure region along said contour and second means for specifying an inside exposure region inside said contour selectively operable in a first mode where said inside exposure region is wholly exposed, a second mode where said inside exposure region is intermittently exposed, and a third mode where said inside exposure region is not exposed.

With this construction, when the first mode is selected, a solid model is fabricated. When the second mode is selected, a honeycomb model is fabricated. When the third node is selected, a hollow model is fabricated.

It is preferable that said second means comprises means for offsetting an outer periphery of said inside exposure region by an amount such that said outer periphery overlaps with an inside half of said exposure region specified by said first means.

With this construction, in the case of forming a honeycomb structure or a solid portion inside the contour, an extra solidified portion is prevented from being formed outside the contour, thereby obtaining an accurate model shape.

It is also preferable that said second means comprises means for determining whether or not said exposure region corresponding to said contour of a first section is continuous to said exposure region corresponding to said contour of a second section adjacent to said first section and forcibly adopting said first mode to solidify said exposure region inside said contour of a larger one of said first and second sections when said exposure region corresponding to said contour of said first section is not continuous to said exposure region corresponding to said contour of said second section.

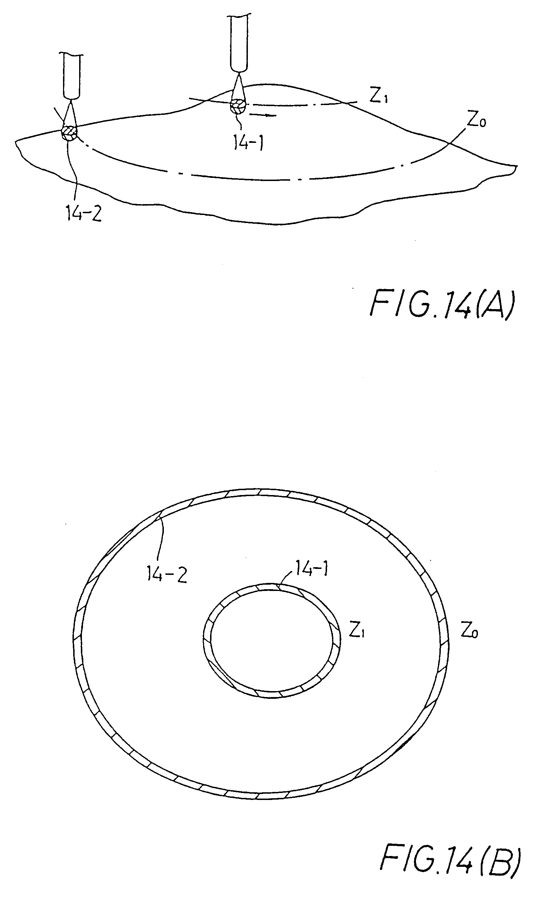

With this construction, in the case of fabricating a model having a gentle inclined surface as shown in Fig. 14(A), and even when a solidifying image corresponding to a contour of a first section of the model is not continuous to that of a second section adjacent to the first section, the first and second sections are connected together by forcibly selecting the first node for a larger one of the first and second sections to obtain a hollow model or a honeycomb model.

With the present invention, all of the hollow, solid and honeycomb models may be fabricated. Accordingly, variety can be given to a model to be fabricated by the photo-solidification modeling method, and the range of its use can be increased. For instance, in the case of using the hollow model for a casting die, a molten metal injected into the hollow model embedded in sand is prevented from being vaporized, thereby obtaining a good casting.

In this manner, the range of utilization of the photo-solidification modeling method can be greatly increased.

The invention will further be understood from the following description, when taken together with the attached drawings, which are given by way of example only, and in which:

Figs. 1(A) to 1(C) are block diagrams of a preferred embodiment of the present invention;

Figs. 2(A) and 2(B) are flowcharts of the essential operation of the system;

Fig. 3 is a schematic perspective view illustrating a triangular patch type of three-dimensional shape data;

Fig. 4 is an illustration of a data structure of the triangular patch type;

Fig. 5(A) is a perspective view of an example of an extracted horizontal plane;

Fig. 5(B) is a schematic illustration of extraction of a horizontal plane;

Fig. 6 is a schematic illustration of extraction of a contour;

Fig. 7 is a plan view of the contour extracted;

Fig. 8(A) is a plan view illustrating a conventional offsetting method;

Fig. 8(B) is a three-dimensional view of Fig. 8-(A);

Fig. 8(C) is a perspective view of a solidified region formed by light beam exposure;

Fig. 9(A) is a three-dimensional view illustrating an offset quantity calculating method;

Fig. 9(B) is a vertical sectional view of Fig. 9(A);

Figs. 9(C) and 9(D) are vertical sectional views of a solidified region formed in consideration of an offset quantity in the case of using a light beam according to the prior art, and the present invention, respectively;

Figs. 9(E) and 9(F) are views similar to Figs. 9-(C) and 9(D), in the case of using a mask film;

Fig. 10(A) is a perspective view of a contour of a desired model shape;

Figs. 10(B) to 10(F) are horizontal sectional views illustrating various exposure modes for exposing an inside region surrounded by the contour shown in Fig. 10(A);

Fig. 10(G) is a plan view illustrating an offsetting method for the exposure region to be formed inside the contour;

Fig. 10(H) is a cross section taken along the line H - H in Fig. 10(G);

Fig. 11(A) is a perspective view of support legs of a model;

Figs. 11(B) to 11(E) are plan views of various patterns of support legs;

Fig. 12(A) is a perspective view of a frame;

Fig. 12(B) is a perspective view of a supporting structure formed by the frame and support;

Figs. 13(A) to 13(C) are vertical sectional views illustrating various modes for setting a support forming region;

Fig. 14(A) is a perspective view illustrating a problem in the case of forming a hollow model having a gentle slant surface;

Fig. 14(B) is a horizontal sectional view of Fig. 14(A);

Fig. 15(A) is a perspective view of a coating brush mechanism; and

Fig. 15(B) is an enlarged side view of the brush of Fig. 15(A).

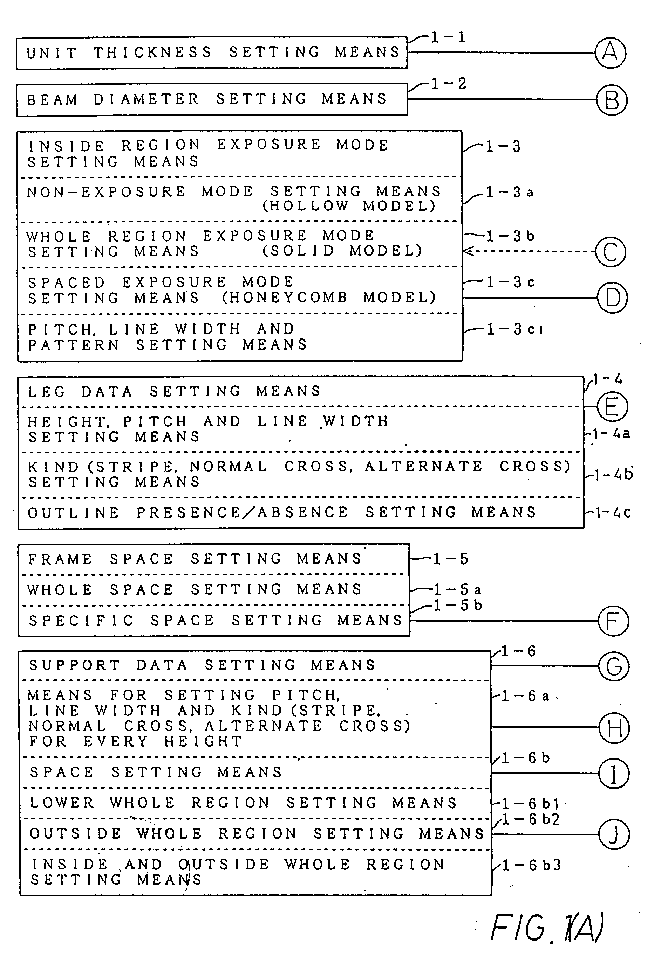

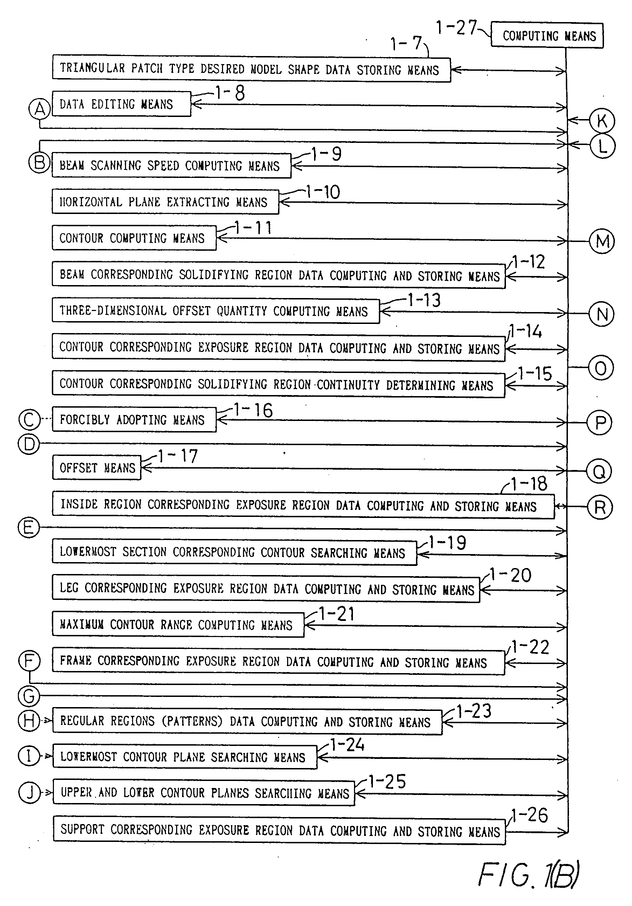

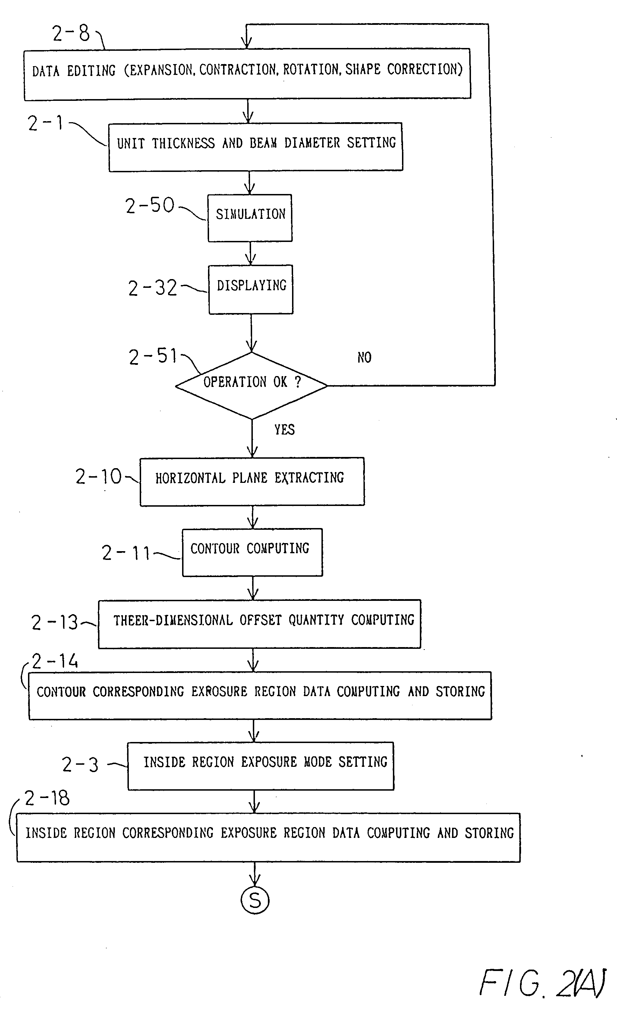

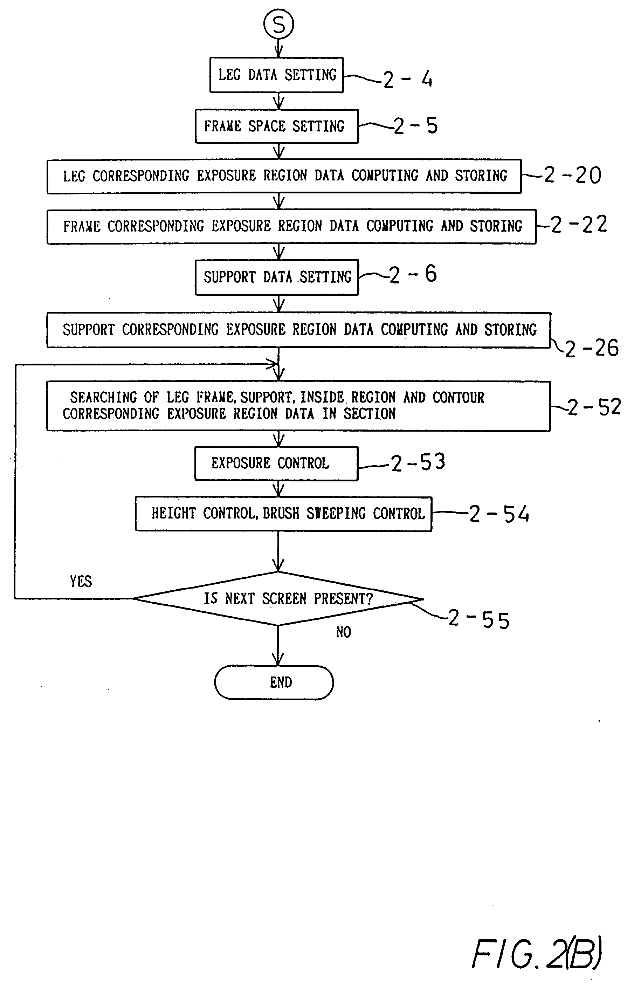

A preferred embodiment of the present invention will now be described in detail. Figs. 1(A) to 1-(C) show an example of a system construction of the photo-solidification modeling device according to the present invention. Figs. 2(A) and 2(B) are flowcharts showing operations of the system shown in Figs. 1(A) to 1(C).

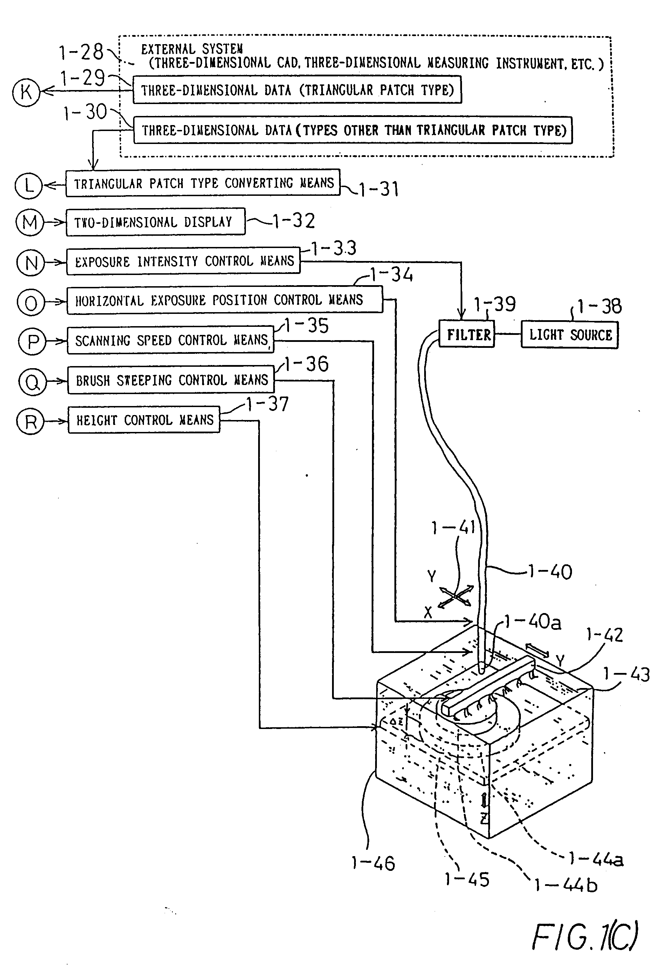

Referring to Fig. 1(C), 1-46 denotes a closed container for storing a liquid that is solidified when exposed to light. The container 1-46 has a transparent upper surface, and the liquid is preferably a photosensitive resin. More preferably, the liquid may be a mixture of one, two, or more of deformed polyurethane methacrylate, oligoester acrylate, urethane acrylate, epoxy acrylate, photosensitive polyimide, and aminoalkyd.

Further, a sensitizer or opaque substance, etc., may be mixed in the liquid to adjust its photoabsorption characteristic or the like. Further, a pigment, ceramic powder, filler, metal powder, etc., may be mixed in the liquid to adjust the color, strength, distortion, modeling accuracy, etc., of a model.

A base 1-45 is vertically (Z direction) movable in the container 1-46 below a liquid surface 1-43. A light source (preferably, a laser) 1-38 is provided above the container 1-46. Light from the light source 1-38 is introduced to an optical fiber 1-40 through a filter 1-39 having both a light shutter function and an exposure quantity adjusting function. A tip 1-40a of the optical fiber 1-40 is movable by an XY driving mechanism 1-41 in two orthogonal directions (XY directions). A brush 1-42 capable of sweeping the liquid surface 1-43 is movable in the Y direction shown.

A solidification modeling part of the present device is formed by the above construction, and it is controlled in the following manner by a system to be hereinafter described.

First, the base 1-45 is lowered below the liquid surface 1-43 by a unit thickness $\Delta Z$ of a model. Under this condition, the tip 1-40a of the optical fiber 1-40 is scanned in the XY directions in a region corresponding to a lowermost section of a desired model shape. As a result, the liquid in the region exposed to light is solidified to form a section solidified image 1-44a corresponding to the lowermost section of the desired model shape on the base 1-45.

Then, the base 1-45 is further lowered by $\Delta Z$. As a result, the lowermost section solidified image 1-44a is also lowered together with the base 1-45, and simultaneously the peripheral liquid is coated over the lowermost section solidified image 1-44a.

As the liquid has a high viscosity, it does not easily flow onto the solidified image 1-44a if the base 1-45 is merely lowered by $\Delta Z$. To avoid this disadvantage, the brush 1-42 is operated to sweep the liquid surface 1-43, to positively coat the liquid onto the solidified image 1-44a. Then, the tip 1-40a of the optical fiber 1-40 is selectively scanned in the XY directions to form a subsequent section solidified image 1-44b on the solidified image 1-44a. The above operation is repeated until a laminated solidified image having the desired model shape is formed in the liquid. More detailed explanation will be omitted since the above concept is basically disclosed in Japanese Laid-Open Patent Publication No. 56-144478.

Reference number 1-28 in Fig. 1(C) denotes an external system connected to the present system by way of on-line or off-line connection. Such an external system may be selected from a three-dimensional CAD system, three-dimensional measuring instrument, continuous tomographic system, etc. These are merely exemplary, and it is sufficient for the external system to have data relating to a three-dimensional shape of the model.

If the form of data included in the external system 1-28 is of a triangular patch type, the data is directly stored into a triangular patch type desired model shape data storing means 1-7 in the present system.

If the form of data included in the external system 1-28 is of a type other than the triangular patch type, the data is converted into the triangular patch type by a triangular patch type converting means 1-31 in the present system, and is then stored into the storing means 1-7.

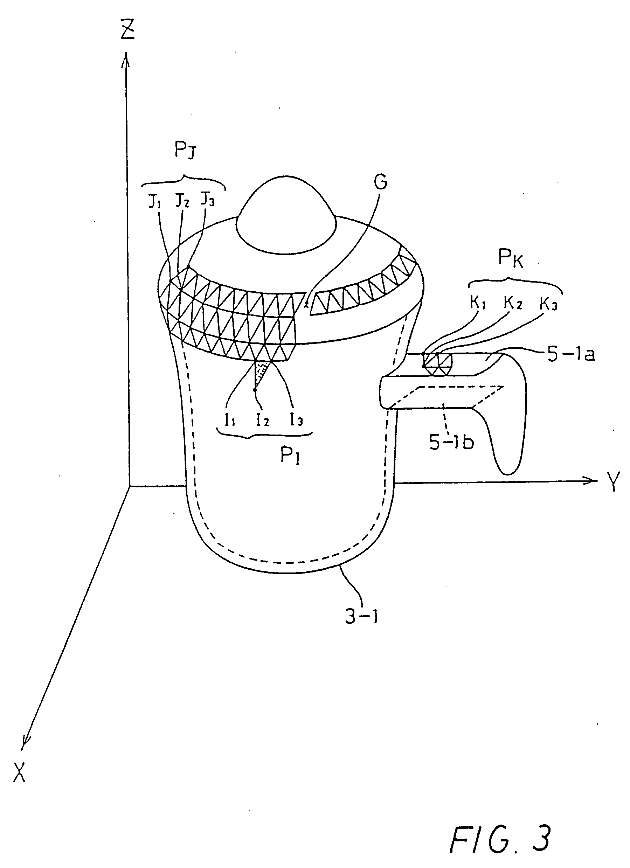

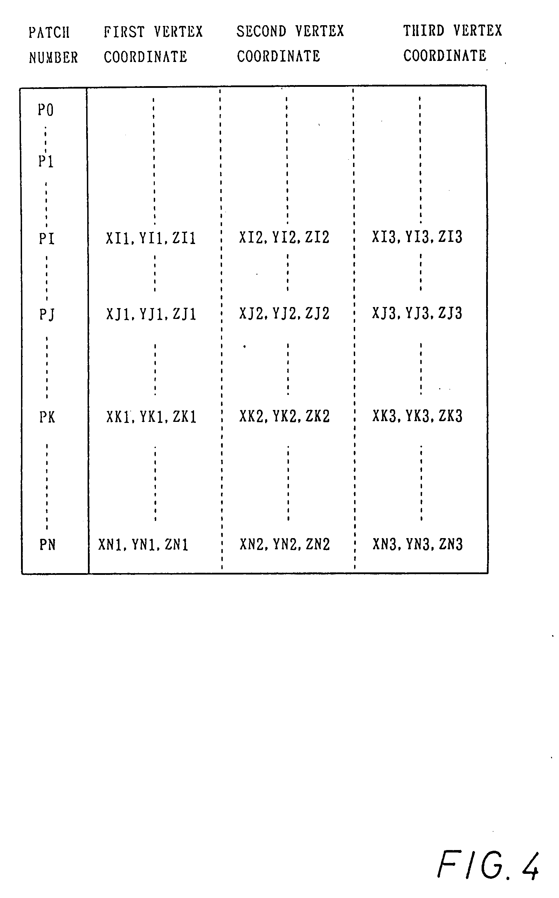

A schematic construction of the triangular patch type data is shown in Figs. 3 and 4. As apparent from Fig. 3, the three-dimensional shape is defined as a set of many triangular patches $P_I$, $P_J$, $P_K$, etc., in the triangular patch type. In Fig. 3, only part of the set of these triangular patches is shown for the purpose of legibility of illustration.

Each triangular patch is defined in position and shape by XYZ coordinates of three vertexes. For instance, the patch $P_J$ is given XYZ coordinates of three vertexes $J_1$, $J_2$ and $J_3$. Accordingly, the three-dimensional shape data of the triangular patch type has a structure as shown in Fig. 4.

The data having the structure shown in Fig. 4 and stored into the storing means 1-7 may be edited by a data editing means 1-8 shown in Fig. 1(B) (see step 2-8 in Fig. 2(A)). In this editing operation, the desired mode shape data can be expanded, contracted, rotated or corrected. Especially, in the correcting operation, data for defining the shape of a structure for supporting the desired model shape may be added. Further, new three-dimensional shape data may be created by using this correcting function.

When an operator of this system sets a unit thickness and a beam diameter by using a unit thickness setting means 1-1 and a beam diameter setting means 1-2 shown in Fig. 1(A) (see step 2-1 in Fig. 2(A)), a perspective view of the edited desired model shape sliced with the unit thickness is displayed on a two-dimensional display 1-32 (see step 2-50 of simulation and step 2-32 of displaying in Fig. 2(A)). Then, the operator confirms whether or not the modeling is to be started under the above condition, and if NO in step 2-51, the operator resets the condition (see the loop from step 2-51). If the condition is satisfied, the following processing is executed in the present system.

First, a beam scanning speed computing means 1-9 shown in Fig. 1(B) computes an optimum scanning speed for solidifying the unit thickness set by the means 1-1 with the beam diameter set by the means 1-2. Then, a horizontal plane extracting means 1-10 is started in step 2-10 to extract a horizontal plane from the desired model shape.

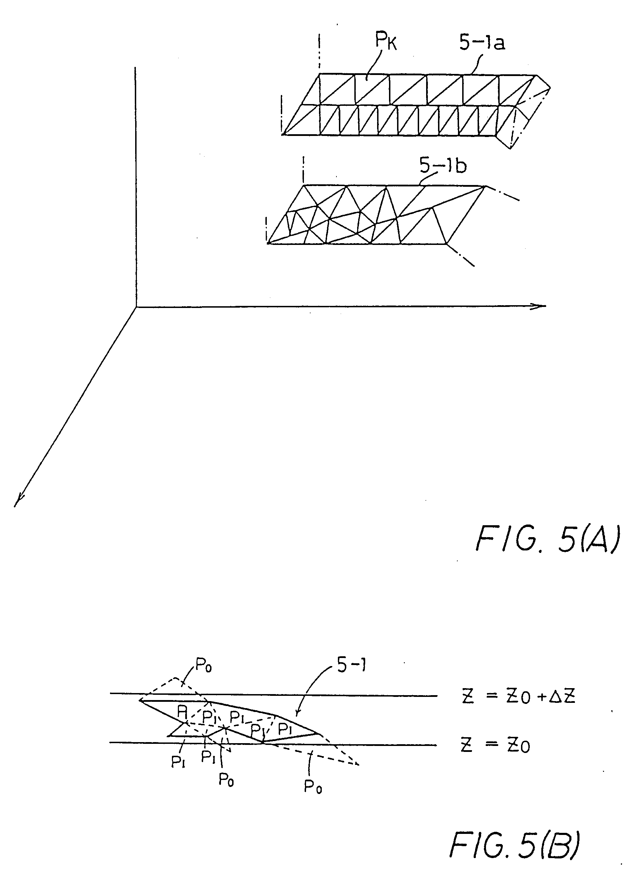

In this preferred embodiment, the unit thickness $\Delta Z$ set by the means 1-1 is employed, and as shown in Fig. 5(B), triangular patches each having the three vertexes all contained within the height range of $\Delta Z$ are searched to compute an outside contour 5-1 of the set of triangular patches.

Fig. 5(B) shows a virtual side view of these triangular patches, in which the three vertexes of each patch $P_I$ reside inside the width of the unit thickness $\Delta Z$, and at least one of the three vertexes of each patch $P_O$ resides outside the width of the unit thickness $\Delta Z$. Thus, the contour 5-1 of the horizontal plane is extracted and computed from the outermost line of the set of the patches $P_I$.

The inside area surrounded by the contour 5-1 in the horizontal plane extracted above is uniformly exposed to light to be solidified. Fig. 5(A) is a virtual view of horizontal planes 5-1a and 5-1b extracted from the triangular patch data shown in Fig. 3.

Then, the present system executes computation of a contour by using a contour computing means 1-11 shown in Fig. 1(B) (see step 2-11 in Fig. 2(A)).

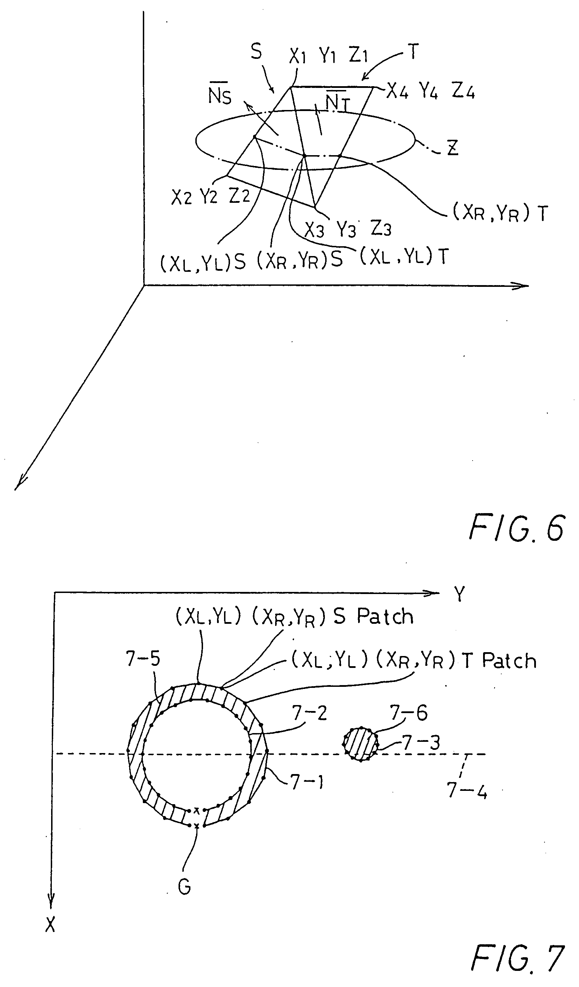

Fig. 6 is a schematic illustration of contour computing in which each non-horizontal triangular patch (patches S and T being exemplarily shown in Fig. 6) intersects a horizontal plane Z sliced with the unit thickness $\Delta Z$, and two intersections between each patch and the plane Z are computed.

As shown in Fig. 6, the two intersections between the patch S and the plane Z are denoted by $(X_L, Y_L)S$ and $(X_R, Y_R)S$, while the two intersections between the patch T and the plane Z are denoted by $(X_L, Y_L)T$ and $(X_R, Y_R)T$. As the patches S and T are adjacent to each other, a common intersection resides on the adjacent line. That is, the intersection $(X_R, Y_R)S$ is coincident to the intersection $(X_L, Y_L)T$.

Then, on the basis of these intersection coordinates computed above, plural contours 7-1, 7-2, 7-3, etc., in a certain section as shown in Fig. 7 are computed.

As shown in Fig. 3, there is a case that the triangular patches in some section are not continuous to define a gap G. That is, the extracted contours 7-1 and 7-2 do not form a closed curve. In this case, the nearest intersections are searched, and they are connected together to obtain a closed curve. As shown in Fig. 7, the contours thus computed are classified into a group for forming a desired model shape inside the contour (e.g., 7-1) and a group for forming the desired model shape outside the contour (e.g., 7-2). Such classification is effected by searching the contours along a search line 7-4 from the left side, for example, and giving an inside indicating flag for the contour 7-1 first intersecting the search line 7-4 and an outside indicating flag for the contour 7-2 secondly intersecting the search line 7-4.

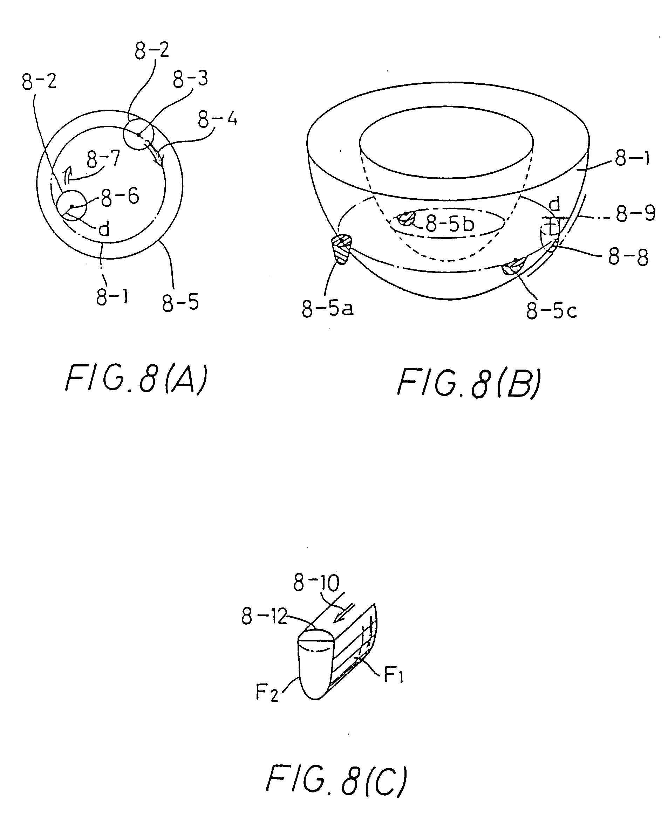

Referring back to Fig. 1(B), the present system includes a beam corresponding solidifying region data computing and storing means 1-12 for computing and storing a sectional shape of a region to be solidified when the beam having the beam diameter set by the means 1-2 is scanned at the speed computed by the means 1-9. That is, as shown in Fig. 8(C), the means 1-12 computes and stores a sectional shape F2 of a region F1 to be solidified when a light beam 8-12 is scanned as shown by an arrow 8-10. Then, a three-dimensional offset quantity computing means 1-13 shown in Fig. 1(B) computes a three-dimensional offset quantity for the horizontal line data extracted by the means 1-10 and the contour data computed by the means 1-11 by using solidifying region data computed by the means 1-12.

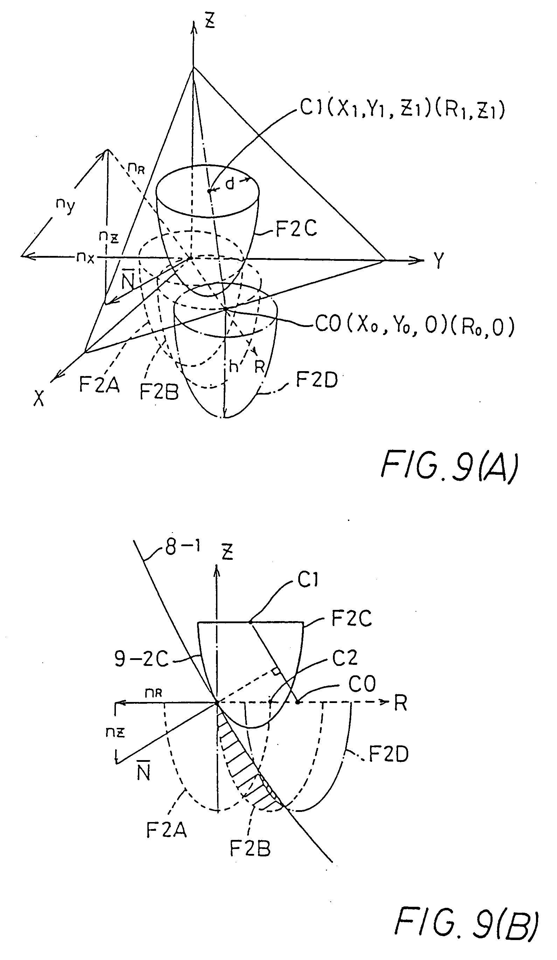

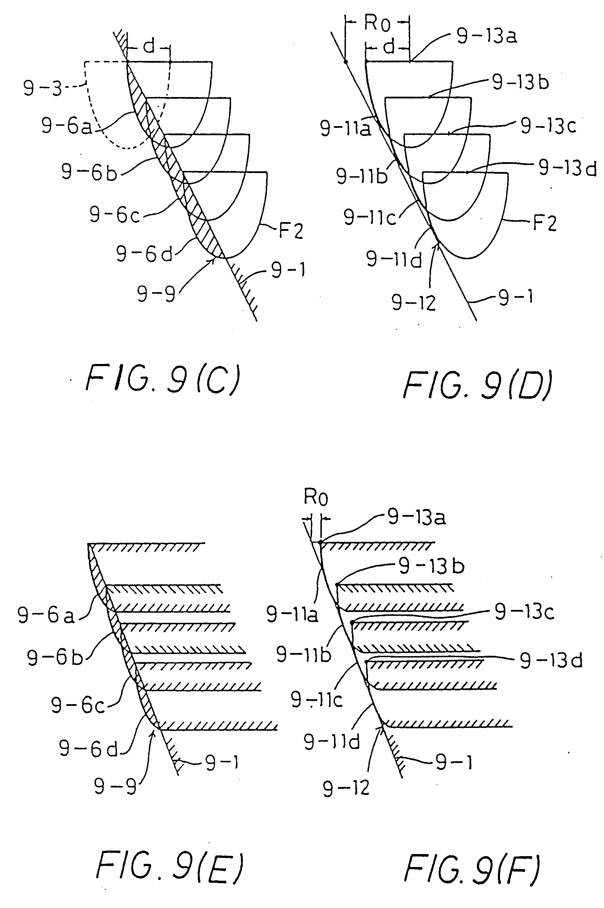

The computation of such a three-dimensional offset quantity will now be described with reference to Figs. 8(A) to 8(C) and Figs. 9(A) to 9(F).

Referring to Fig. 8(A) which is a plan view of the liquid surface, 8-2 denotes an exposure region of the light beam. In the case that the center 8-3 of the exposure region 8-2 is scanned along a contour 8-1 (computed by the means 1-11) as shown by an arrow 8-4, a contour 8-5 of a region to be solidified is undesirably formed outside the contour 8-1.

Fig. 8(B) is a stereoscopic view of Fig. 8(A). As shown in Fig. 8(B), in the case that the center of the light beam resides on the contour of the model, regions 8-5a, 8-5b, 8-5c, etc., are solidified, and the contour of an actual solidified region to be formed by continuously connecting outermost surfaces of the regions 8-5a, 8-5b, 8-5c, etc., does not coincide with the contour 8-1.

To avoid the above problem, the conventional photo-solidification modeling device practically used at present is designed to scan the center of the light beam along a line offset inside of the contour by a distance equal to the radius of the beam as shown in a left lower area of Fig. 8(A).

As shown in the left lower area of Fig. 8(A), in the case that the center 8-6 of the light beam is offset inside of the exposure region 8-2 by a radius d of the light beam, the contour of the solidified region becomes coincident with the contour 8-1 as far as viewed in plan.

However, it is understood from Fig. 8(B) that a problem remains from a stereoscopic standpoint. As shown in Fig. 8(B), 8-8 denotes a region to be solidified by a light beam that has been offset inside by the radius d. Since the desired model shape is gradually narrowed in the direction of the lowermost surface, it is understood that an excess region 8-8 (the hatched portion) is solidified. Accordingly, a contour 8-9 of an actual model shape is formed outside the contour 8-1 of the desired model shape.

Figs. 9(A) to 9(F) show a method of three-dimensionally offsetting the exposure region of the light beam, so as to eliminate the above problem.

Fig. 9(A) shows a three-dimensional coordinate system wherein the origin coincides with one of the intersections between the triangular patch and the horizontal plane Z shown in Fig. 6. In this preferred embodiment, the origin of the coordinate system shown in Fig. 9(A) coincides with the intersection $(X_R, Y_R)S$ or $(X_L, Y_L)T$.

Referring to fig. 9(A), F2A to F2d denote a common three-dimensional shape to be formed by rotating the sectional shape F2 shown in Fig. 8(C) about the center of the beam, and $\overline{N}$ denotes a unit normal vector at the origin, i.e., the intersection $(X_R, Y_R)S$ or $(X_L, Y_L)T$. The unit normal vector $\overline{N}$ is calculated as a vector sum of unit normal vectors $\overline{N}_S$ and $\overline{N}_T$ with respect to the adjacent patches shown in Fig. 6. Direction of each of the unit normal vectors $\overline{N}_S$ and $\overline{N}_T$ is computed from the vertex coordinates of each patch, and the sense of each vector is defined with reference to the inside and outside indicating flags previously mentioned in relation to the search line 7-4 in Fig. 7. In this preferred embodiment, the sense of each vector is defined such that each vector is oriented from the inside to the outside of the desired model shape. The unit normal vector $\overline{N}$ thus computed has components nx, ny and nz.

In Fig. 9(A), $\overline{n}_R$ denotes a vector having the components $n_x$ and $n_y$ in the XY plane, and an R axis is given in the direction of the vector $\overline{n}_R$. Fig. 9(B) shows an RZ plane given in Fig. 9(A).

As shown in Figs. 9(A) and 9(B), F2A denotes a solidified region to be obtained when the beam center coincides with the intersection (i.e., the origin in this case). It is apparent that a large proportion of the solidified region F2A is undesirably formed outside the contour 8-1. F2B denotes a solidified region to be obtained when the beam center is offset inside the contour 8-1 along the R axis by the radius d. It is understood that a hatched portion of the solidified region F2B is also undesirably formed outside the contour 8-1. In contrast, F2C denotes a solidified region to be obtained when the beam center C1 is offset inside the contour 8-1 so that a three-dimensional contour 9-2C of the solidified region F2C passes the intersection (the origin) and that a normal vector for the contour 9-2C coincides with the normal vector $\overline{N}$ for the contour 8-1 at the origin. In other words, the solidified region F2C is offset inside the contour 8-1 so that the contour 9-2C of the solidified region F2C intersects the contour 8-1 at the origin.

In this case, assuming that the solidified region F2C is a spheroid having a minor axis "d" and a major axis "h," the above relation can be satisfied by offsetting the beam center by a distance $R_1$ along the R axis and a distance $Z_1$ along the Z axis, wherein $R_1$ and $Z_1$ are defined as follows:

$$R_1 = d^2 n_R/(h^2 n_z 2 + d^2 n_R 2)^{1/2}$$
$$Z_1 = h^2 n_z/(h^2 n_z 2 + d^2 n_R 2)^{1/2}$$

where $n_R = (n_x^2 + n_y^2)^{1/2}$

On the other hand, F2D denotes a solidified region to be obtained by moving the solidified region F2C in a direction perpendicular to the normal vector $\overline{N}$ in the RZ plane so that a Z coordinate of the beam center CO becomes zero.

As apparent from Fig. 9(B), the portion of the solidified region F2D outside the contour 8-1 becomes substantially zero.

The solidified region F2D can be obtained by offsetting the beam center by a distance $X_0$ along the X axis and a distance $Y_0$ along the Y axis, wherein $X_0$ and $Y_0$ are defined as follows:

$$X_0 = n_x(d^2 n_x^2 + d^2 n_y^2 + h^2 n_z^2)^{1/2}/(n_x^2 + n_y^2)$$
$$Y_0 = n_y(d^2 n_x^2 + d^2 n_y^2 + h^2 n_z^2)^{1/2}/(n_x^2 + n_y^2)$$

In this case, the contour of the three-dimensional solidified region can be made substantially coincident with the contour of the desired model shape without changing the height of the beam center.

By using either the former method or the latter method, the means 1-13 computes an offset quantity of the beam center.

In the case of controlling the exposure region in every horizontal section as in this preferred embodiment, the latter method is suitably adopted. In the case of controlling the exposure region by immersing the tip of the optical fiber into the liquid and moving the tip in the XYZ directions, the former method may be adopted to three-dimensionally offset the beam center.

Fig. 9(C) shows a vertical section of a laminated solidified region in the case of offsetting the beam center by the radius d. In contrast, Fig. 9(D) shows a vertical section of a laminated solidified region in the case of offsetting the beam center by the distances $X_0$ and $Y_0$ as mentioned above. As apparent from Figs. 9(C) and 9(D), a contour 9-12 of the laminated solidified region according to the offsetting method of the present invention as shown in Fig. 9(D) is made substantially coincident with a contour 9-1 of the desired model shape having a downwardly tapering shape.

The above-mentioned problem occurs not only in the case of using a light beam but also in the case of using a mask film or a projector to expose the liquid surface to light uniformly as shown in Fig. 9(E).

Fig. 9(E) shows the case where a contour of each exposure region is made coincident with the downwardly tapering contour 9-1 of the desired model shape. As apparent from Fig. 9(E), hatched portions 9-6a, 9-6b, 9-6c, 9-6d, etc., of the exposure regions are excessively solidified outside of the contour 9-1.

In contrast, Fig. 9(F) shows an improvement with respect to Fig. 9(E), wherein contours 9-11a, 9-11b, 9-11c, 9-11d, etc., of the solidified regions are offset inside by the amount of $R_0$ so as to contact the downwardly tapering contour 9-1. According to this method, the contour 9-12 of the solidified image can be made substantially coincident with the contour 9-1 of the desired model shape.

After the means 1-13 computes the optimum offset quantity as mentioned above, a contour corresponding exposure region data computing and storing means 1-14 computes and stores data relating to a scanning position of the beam center for offsetting the exposure region by the computed offset quantity and solidifying the exposure region corresponding to the horizontal line extracted by the means 1-10 or the contour computed by the means 1-11.

In this preferred embodiment, the present system further includes a means 1-3 for setting an exposure mode for an inside region 7-5 surrounded by the contours 7-1 and 7-2 or an inside region 7-6 surrounded by the contour 7-3 as shown in Fig. 7, for instance (see step 2-3 in Fig. 2(A)).

This exposure mode is classified into a non-exposure mode, whole region exposure mode, and spaced exposure mode.

In the first case of setting the non-exposure mode by using a means 1-3a, a hollow model solidified at the contour only is fabricated as shown in Fig. 10(F). In this mode, an outer surface 10-2a shown in Fig. 10(F) corresponding to a contour 10-2 shown in Fig. 10(A) is solidified, and an inner surface 10-3a shown in Fig. 10(F) corresponding to a contour 10-3 shown in Fig. 10(A) is also solidified. However, an inside region between the contours 10-2 and 10-3 is not solidified to define a hollow portion 10-8, thus fabricating a hollow model.

This mode is effective in the case where the model shape only is important, and high strength is not required. As the exposure region is small, the modeling time can be shortened.

In the second case of setting the whole region exposure mode by using a means 1-3b, the inside region between the contours 10-2 and 10-3 is wholly solidified to fabricate a solid model as shown in Fig. 10(B). This mode is suitable in the case where the model must have high strength.

In the third case of setting the spaced exposure mode by using a means 1-3c, the operator can select one of a normal cross mode (Fig. 10(C)-), alternate cross mode (Figs. 10(D)1 and 10(D)2), and stripe mode (Fig. 10(E)).

In the stripe mode shown in Fig. 10(E), the inside region is spacedly exposed in one direction. In the normal cross mode shown in Fig. 10(C), the inside region is spacedly exposed in two different directions in the same section. In the alternate cross mode, shown in Figs. 10(D)1 and 10(D)2, the inside region is spacedly exposed by alternating the scanning direction in the stripe mode in every section.

The spaced exposure mode can set by using a means $1-3c_1$ to select a desired pattern (i.e., normal cross, alternate cross, or stripe), having a selected pitch and exposure width. The exposure width can be set to be different from the beam diameter set by the means 1-2.

According to the spaced exposure mode, a honeycomb structure is additionally formed in the hollow model to fabricate a honeycomb model.

After setting the exposure mode for the inside region, an offset means 1-17 is started. The offset means 1-17 computes an offset quantity shown in Figs. 10(G) and 10(H). Referring to Fig. 10(G), 10-14 denotes a light beam for exposing the contour. The light beam 10-14 is scanned in the direction of arrow 10-16 with the beam center being offset inside the contour to a position 10-15. On the other hand, 10-10 denotes a light beam for exposing the inside region. In the case that the scanning of the light beam 10-10 is stopped at a position where a leading end 10-11a of the light beam 10-10 contacts the circumference of the light beam 10-14, a contour corresponding solidified region 10-14a is not sufficiently connected to an inside region corresponding to solidified region 10-10a as shown in Fig. 10(H)(1), with result that a sufficient supporting effect by the honeycomb structure cannot be obtained.

In contrast, when the scanning of the light beam 10-10 is stopped at a position where the beam center 10-13 of the light beam 10-10 coincides with the beam center 10-15 of the light beam 10-14, an extra solidified region 10-18 is formed by the beam 10-10 outside the circumference of the contour corresponding solidified region 10-14a as shown in Fig. 10(H)(3), with the result that the desired model shape cannot be precisely obtained.

In consideration of these problems, the offset means 1-17 computes an optimum offset quantity of the light beam 10-10 in such a manner that the scanning of the light beam 10-10 is stopped at a position where the leading end 10-12a of the light beam 10-10 contacts the beam center 10-15 of the light beam 10-14, that is, the beam center 10-12 of the light beam 10-10 is offset inside the circumference of the light beam 10-14 by a radius of the light beam 10-10 (see Fig. 10(H)(2)). The exposure region in the inside region is computed and stored by an inside region corresponding exposure region data computing and storing means 1-18 according to the information set by the means 1-3 and the offset quantity computed by the means 1-17 (see step 2-18 in Fig. 2(A)).

Such an overlapping range between the contour corresponding exposure region and the inside region corresponding exposure region may be appropriately set by the operator within the range between Figs. 10(H)(1) and Fig. 10(H)(3).

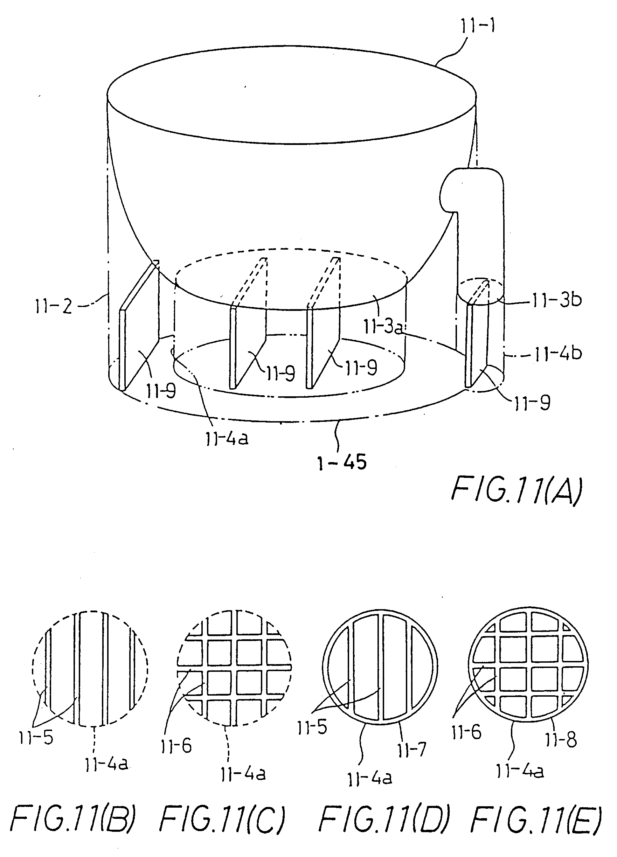

Further, the operator can set leg data by using a means 1-4 included in the present system. Referring to Fig. 11(A), a plurality of legs 11-9 are formed on the base 1-45 in the container 1-46. A desired model shape 11-1 is formed on the legs 11-9. If the solidified image of the model is directly laminated on the base 1-45 without the legs 11-9, the solidified image will be broken or distorted when removed from the base 1-45. The legs 11-9 prevent this problem.

As shown in Fig. 11 (A), the legs 11-9 are formed in spatial ranges 11-4a and 11-4b corresponding to lowermost sections 11-3a and 11-3b searched by using a means 1-19. The legs 11-9 are also formed in a frame setting space 11-2 to be hereinafter described.

The leg data defines leg height, pitch, line width and pattern (stripe, normal cross, or alternate cross). These data are set by using means 1-4a and 1-4b. The leg data further defines if an outline is present or absent. This data is set by using a means 1-4c.

Leg height is the height of each leg to be solidified prior to modeling of the desired model shape. The pattern, pitch and line width are the same as those previously mentioned. The outline means an outline to be formed along a boundary of a leg forming region.

In the case that the presence of the outline is set by the means 1-4c, a peripheral leg 11-7 (see Fig. 11(D)) or a peripheral leg 11-8 (see Fig. 11(E)) is formed along the boundary of the leg forming region 11-4a.

In the case where the outline is not set by the means 1-4c, no peripheral leg is formed as shown in Figs. 11(B) and 11(C).

Figs. 11(B) and 11(D) show the case where the stripe mode is selected to form stripe legs 11-5. Figs. 11(C) and 11(E) show the case where the normal cross mode is selected to form normal cross legs 11-6.

After the leg data is entered by the means 1-4 (see step 2-4 in Fig. 2(B)), a leg corresponding exposure region data computing and storing means 1-20 computes and stores exposure region data for the formation of the legs by referring to the leg data as entered above, the information of the lowermost section, and data relating to a frame setting space which will be hereinafter described (see step 2-20 in Fig. 2(B)).

The operator can set the frame setting space by using a means 1-5 in the present system. In this case, the operator can select whether a whole space is to be set by using a means 1-5a or a specific space is to be set by using a means 1-5b.

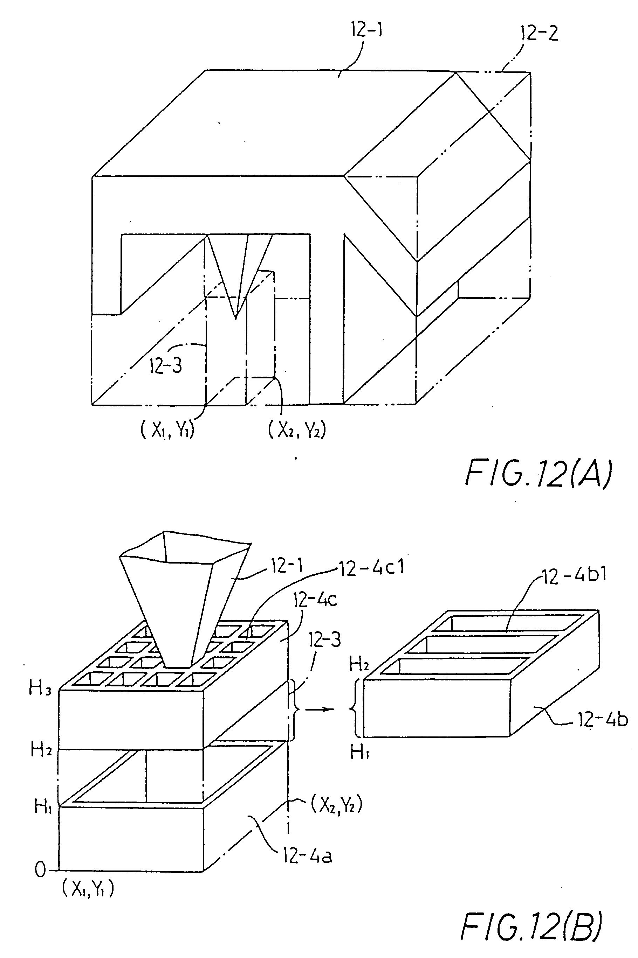

In the case of setting the whole space, a maximum contour range computing means 1-21 is started to compute a rectangular parallelepiped 12-2 entirely covering a desired model shape 12-1 as shown in Fig. 12(A). Then, a frame corresponding exposure region data computing and storing means 1-22 computes and stores exposure region data for forming a frame to be solidified at four side walls of the rectangular parallelepiped 12-2.

In the case of setting the specific space, such a specific space is specified by coordinate data $(X_1, Y_1)$ and $(X_2, Y_2)$ of a diagonal as shown in Fig. 12(A), and the means 1-22 computes and stores exposure region data for forming a frame to be solidified at four side walls of a rectangular parallelepiped 12-3 having a rectangular bottom surface defined by the above diagonal.

The frame functions as a model shape supporting means in cooperation with a support to be formed inside the frame as will be hereinafter described.

The support data is set by specifying a pitch, line width, and pattern (stripe, normal cross, or alternate cross) of a support to be formed in the frame space for every given height by using a means 1-6a. After setting the support data, an exposure region data is computed to form the support in the frame space according to the support data set above.

More specifically, pattern data is previously stored in a regular regions (patterns) data computing and storing means 1-23, and one of the pattern data, that is, one of the stripe, normal cross, and alternate cross is output from the means 1-23. Then, a support corresponding exposure region data computing and storing means 1-26 computes and stores exposure region data for forming the support by using the above specified pattern data as well as the pitch and line width data.

Fig. 12(B) shows a complex of frames 12-4a, 12-4b, and 12-4c and supports 12-4b1 and 12-4c1 formed inside the frames 12-4b and 12-4c, respectively, in the frame space 12-3 as the rectangular parallelepiped shown in Fig. 12(A). The complex consists of a first element formed by the frame 12-4a only in a height range $0-H_1$, a second element formed by the frame 12-4b and the stripe supports 12-4b1 in a height range $H_1 - H_2$, and a third element formed by the frame 12-4c and the normal cross supports 12-4c1 in a height range $H_2 - H_3$.

In setting the support data under the condition where the whole frame space is set, the operator can select one of a lower whole region, outside whole region, and inside and outside whole region by using a region setting means 1-6b.

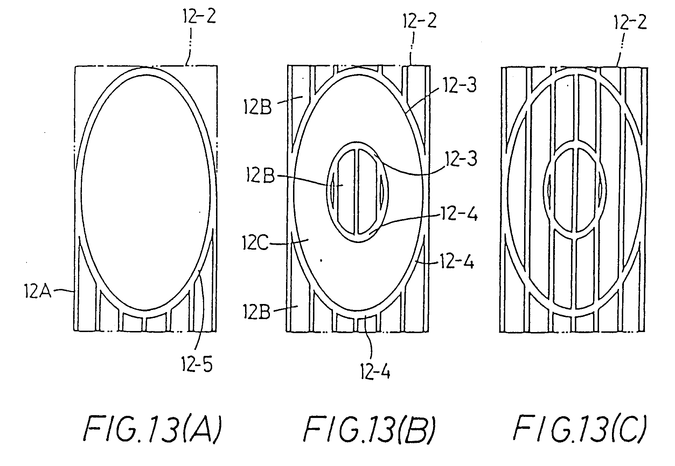

More specifically, when the lower whole region is set by a means 1-6b1, the support is formed in a lower region 12A of the frame space 12-2 below the desired model shape as shown in Fig. 13(A) (vertical section). In this case, a lower surface 12-5 of the desired model shape is searched by a lowermost contour surface searching means 1-24.

When the outside hole region is set by a means 1-6b2, the support is formed in a whole region 12B of the frame space 12-2 outside the desired model shape as shown in Fig. 13(B). In this case, upper surfaces 12-3 and lower surfaces 12-4 of the desired model shape are searched by an upper and lower contour surfaces searching means 1-25.

When the inside and outside whole region is set by a means 1-6b3, the support is formed in the whole of the frame space 12-2 as shown in Fig 13-(C).

Further, the present system also includes a means 1-15 for determining the continuity of a contour corresponding solidifying region.

As shown in Fig. 14(A), for instance, the means 1-15 determines whether contour corresponding solidifying regions 14-1 and 14-2 in vertically adjacent sections $Z_0$ and $Z_1$ are continuous with each other. In the case that the sections $Z_1$ and $Z_0$ are largely different in size as shown in Figs. 14(A) and 14(B), the solidifying region 14-1 becomes discontinuous from the solidifying region 14-2. Accordingly, in the case of forming a hollow model, the solidifying region 14-1 would be in a floating state. To avoid this problem, the hollow model setting mode is forcibly converted into the solid model setting mode by a means 1-16 to expose the whole region inside of the section $Z_0$ in this case to the light beam. As a result, even when the desired model shape has a gentle slant surface, a hollow model having a continuous peripheral surface can be fabricated.

As described above, the exposure region data corresponding to the contour, inside region, leg, frame and support are computed and stored in the respective computing and storing means 1-14, 1-18, 1-20, 1-22 and 1-26. Thereafter, the modeling is actually started. First, the leg is formed by the exposure according to the exposure region data corresponding to the leg. After the height of the leg reaches a predetermined value, the frame, support, and inside region in the lowermost section are formed by exposure according to the exposure region data corresponding to the frame, support, and inside region. Finally, the contour is formed by exposure according to the exposure region data corresponding to the contour.

By finally forming the contour as mentioned above, a local change in liquid level due to the fact that the liquid is surrounded by a solidified image can be suppressed to minimize distortion of the model shape during modeling. In the actual control of the exposure, the filter 1-39 is controlled by an exposure intensity control means 1-33, and the XY driving mechanism 1-41 for moving the tip 1-40a of the optical fiber 1-40 in the XY directions is controlled by a horizontal exposure position control means 1-34. Further, a scanning speed is controlled by a scanning speed control means 1-35. The filter 1-39 and the scanning speed are controlled in coordination with each other.

Further, the lowering of the base 1-45 by the unit thickness $\Delta Z$ after the exposure for one section is carried out by height control means 1-37.

After lowering the base 1-45 by the unit thickness $\Delta Z$, the brush 1-42 is moved in a direction (Y direction) perpendicular to a longitudinal direction (X direction ) of the brush 1-42 by a brush sweeping control means 1-36.

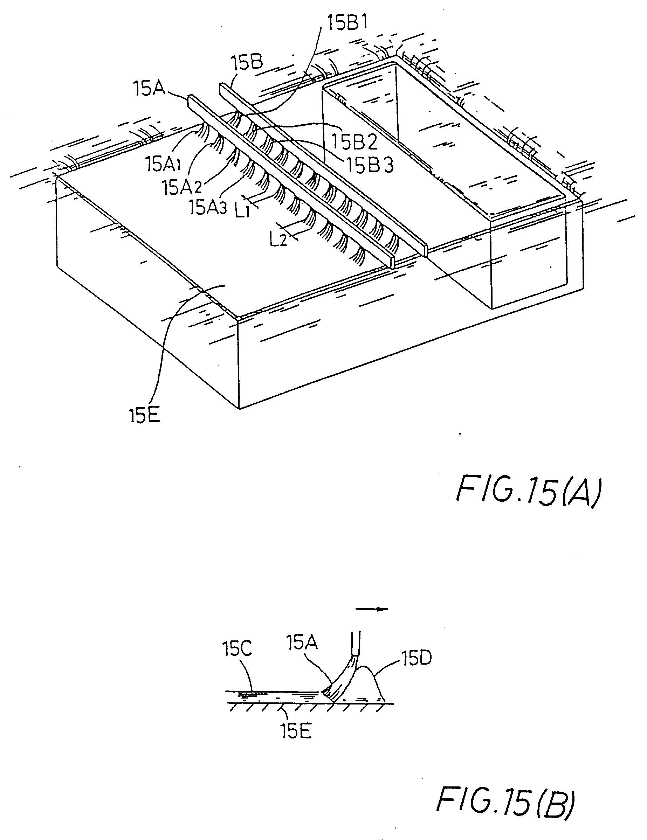

Referring to Fig. 15(A), the brush may be comprised of a first brush 15A and a second brush 15B arranged in parallel to each other at a given interval and adapted to be moved together. The first brush 15A is provided with a plurality of brush elements

$15A_1$, $15A_2$, $15A_3$, etc., spaced at regular intervals in the longitudinal direction of the first brush 15A. Similarly, the second brush 15B is provided with a plurality of brush elements $15B_1$, $15B_2$, $15B_3$, etc., spaced at regular intervals in the longitudinal direction of the second brush 15B in such a manner that the brush element $15B_1$ is located at a position opposed to a space between brush elements $15A_1$ and $15A_2$ of the first brush 15A, and the other brush elements of the second brush 15B are also located in the same manner as above. With use of such a brush, the liquid can be coated with a uniform thickness even on a large solidified layer of the model shape as in the case of fabricating a solid model.

As to the arrangement of the brush elements, the best result of coating of the liquid was obtained by setting a width L2 of each brush element to 2 mm and setting a spacing L1 between the adjacent brush elements to 1 mm. As shown in Fig. 15(B), the liquid is carried as the form of a wave 15D onto a solidified image 15E by the brush. Accordingly, if the spacing L1 is too wide, good wave formation cannot be obtained. Conversely, if the spacing L1 is too narrow, the volume of the wave 15D becomes large, and accordingly a coating layer 15C of the liquid cannot be desirably formed. Further, if the length of each brush element is too small, the wave 15D cannot be sufficiently formed, and an amount of the liquid to be retained among fibers of the brush element is not sufficient, resulting in defective coating. On the other hand, if the length of each brush element is too large, the size of the wave 15D becomes large resulting in defective coating.

Further, the material, thickness, and sweeping speed of the brush element are also important. If the brush element is too hard, the solidified image is broken by the brush element. If the brush element is too soft, or the sweeping speed is too slow, the wave effect cannot be obtained. These factors should be suitably selected in consideration of the properties of the liquid and the solidified image. In any case, it is beneficial if the brush elements be spaced at regular intervals in the longitudinal direction of the brush so as to obtain a good coating.

Further, since the first brush 15A and the second brush 15B are arranged in parallel as shown in Fig. 15(A), the thickness of the coating layer 15C can be made uniform even in the case of sweeping a wide surface of the solidified image 15E.

According to the above preferred embodiment, the contour corresponding exposure region data is decided in consideration of a three-dimensional offset quantity with respect to a contour of a desired model shape. The three-dimensional offset quantity is a quantity for offsetting a contour of a solidified region to make the same contact the contour of the desired model shape. Therefore, the contour of the solidified region can be made precisely coincident with the contour of the desired model shape by the exposure according to the data decided in consideration of the offset quantity. Thus, the accuracy of the desired model shape can be greatly improved.

Furthermore, according to the preferred embodiment, it is possible to select a solid, hollow or honeycomb model according to the intended use of the model. Accordingly, the intended use itself can be widened (for instance, the hollow model can be applied to a casting die), and modeling time can be shortened according to the intended use of the model to widen the intended use of the system.

Furthermore, as the supporting structure (support and frame) is formed in the modeling of the desired model shape, the accuracy of the desired model shape can be highly retained. In connection with this, the diameter of the beam for forming this supporting structure can be set independently of that for forming the desired model shape. Accordingly, the supporting structure can be easily removed after the modeling is terminated.

Further, as the kind and exposure region of the supporting structure can be specified, the supporting structure can be formed at a necessary part only to reduce the modeling time.

Further, as the frame can be set in relation to the support, the kind, pitch, etc., of the support can be modified in every height of the frame to reduce the modeling time.

In addition, the liquid is coated on the solidified image by using the brush having a plurality of brush elements spaced at regular intervals. Therefore, the liquid can be coated with a uniform thickness in a short time to improve modeling accuracy and reduce modeling time.

In conclusion, the system of the preferred embodiment includes various improvements in combination, and is superior to the conventional system.

While the invention has been described with reference to a specific embodiment, the description is illustrative and is not to be construed as limiting the scope of the invention. Various modifications and changes may occur to those skilled in the art without departing from the scope of the invention as defined by the appended claims.

## Claims

1. A photo-solidification modelling device for forming a solidified image having a desired model shape by exposing to light a liquid capable of being solidified upon exposure to the light in a region corresponding to the desired model shape, characterised by first means (1-11, 1-14) for computing a position of a contour of said desired model shape and specifying an exposure region (10-14a) along said contour, and second means (1-3) for specifying an inside exposure region (10-10a) inside said contour selectively operable in a first mode (1-3b) where said inside exposure region (10-14a) is wholly exposed, a second mode (1-3c) where said inside exposure region (10-14a) is intermittently exposed, and a third mode (1-3a) where said inside exposure region (10-14a) is not exposed.

2. A device according to claim 1, wherein said second means (1-3) comprises means (1-17) for offsetting an outer periphery of said inside exposure region (10-10a) by an amount such that said outer periphery overlaps with an inside half of the exposure region (10-14a) specified by said first means (1-11, 1-14).

3. A device according to claim 1 or claim 2, wherein said contour is a first contour of a first section of said desired model shape, and said second means (1-3) comprises means (1-15, 1-16) for determining whether or not said exposure region (10-14a) corresponding to said first contour is continuous with an exposure region (10-14a) of a second contour of a second section of said desired model shape, said second section being adjacent said first section, and if said exposure region (10-14a) corresponding to said first contour is not continuous with said exposure region (10-14a) corresponding to said second contour, then forcibly adopting said first mode (1-3b) of said second means (1-3) to solidify the exposure region inside the outer contour and outside the inner contour of the first and second contours.

**Patentansprüche**

1. Lichthärtungs-Formungsapparatur zum Formen einer verfestigten Abbildung, die eine gewünschte Modellform hat, durch Belichtung einer Flüssigkeit, die sich unter Lichteinwirkung in einem der gewünschten Modellform entsprechenden Bereich verfestigt,
    **gekennzeichnet** durch
    erste Einrichtungen (1-11, 1-14) zur Berechnung einer Lage einer Kontur der gewünschten Modellform und zum Spezifizieren eines Belichtungsbereichs längs der Kontur, und
    eine zweite Einrichtung (1-3) zum Spezifizieren eines inneren Belichtungsbereichs (10-10a) innerhalb der Kontur, die wahlweise betrieben werden kann in einem ersten Modus (1-3b), in dem der innere Belichtungsbereich vollständig belichtet wird, einem zweiten Modus (1-3c), in dem der innere Belichtungsbereich intermittierend belichtet wird, und einem dritten Modus (1-3a), in dem der innere Belichtungsbereich nicht belichtet wird.

2. Apparatur nach Anspruch 1, worin die zweite Einrichtung (1-3) eine Einrichtung (1-17) zum Versetzen einer äußeren Peripherie des inneren Belichtungsbereichs (10-10a) um solch einen Betrag aufweist, daß die äußere Peripherie eine innere Hälfte des durch die ersten Einrichtungen (1-11, 1-14) spezifizierten Belichtungsbereichs überlappt.

3. Apparatur nach Anspruch 1 oder Anspruch 2, worin die Kontur eine erste Kontur eines ersten Abschnitts der gewünschten Modellform ist und die zweite Einrichtung (1-3) Einrichtungen (1-15, 1-16) aufweist zum Bestimmen, ob der der ersten Kontur entsprechende Belichtungsbereich stetig mit einem Belichtungsbereich einer zweiten Kontur eines zweiten, dem ersten Abschnitt benachbarten Abschnitts der gewünschten Modellform verbunden ist oder nicht, und zum wirksamen Übernehmen des ersten Modus (1-3b) der zweiten Einrichtung (1-3) zum Verfestigen des Belichtungsbereichs innerhalb der äußeren Kontur und außerhalb der inneren Kontur der ersten und der zweiten Kontur, wenn der der ersten Kontur entsprechende Belichtungsbereich nicht stetig mit dem der zweiten Kontur entsprechenden Belichtungsbereich verbunden ist.

**Revendications**

1. Dispositif pour le modelage par photodurcissement pour former une image solidifiée ayant une forme de modèle souhaitée en exposant à la lumière un liquide pouvant être solidifié à l'exposition à la lumière dans une zone correspondant à la forme du modèle souhaitée, caractérisé par des premiers moyens (1-11, 1-14) pour calculer une position d'un contour de cette forme de modèle souhaitée et pour préciser une zone d'exposition le long de ce contour, et des seconds moyens (1-3) pour préciser une zone d'exposition interne (10-10a) à l'intérieur de ce contour, sélectivement opérant dans un premier mode (1-3b) dans lequel la zone d'exposition interne est entièrement exposée, un second mode (1-3c) dans lequel la zone d'exposition interne est exposée par intermittence et un troisième mode (1-3a) dans lequel la zone d'exposition interne n'est pas exposée.

2. Dispositif selon la revendication 1, dans lequel les seconds moyens (1-3) comprennent des moyens (1-17) pour redresser la périphérie extérieure de la zone d'exposition interne (10-10a) d'une quantité telle que la périphérie extérieure est en chevauchement avec une moitié interne de la zone d'exposition précisée par le premier moyen (1-11, 1-14).

3. Dispositif selon la revendication 1 ou la revendication 2, dans lequel le contour est un premier contour d'une première section de forme de modèle souhaité, et ce second moyen (1-3) comprend des moyens (1-15, 1-16) pour déterminer si la zone d'exposition correspondant au premier contour est continue avec une zone d'exposition d'un second contour d'une seconde section de forme de modèle souhaitée, cette seconde section étant contiguë à la première section et si la zone d'exposition correspondant au premier contour n'est pas continue avec la zone d'exposition correspondant au second contour, alors en adoptant obligatoirement le premier mode (1-3b) des seconds moyens (1-3) pour solidifier la zone d'exposition à l'intérieur du contour extérieur et à l'extérieur du contour intérieur des premier et second contours.

UNIT THICKNESS SETTING MEANS ——1—1 Ⓐ

BEAM DIAMETER SETTING MEANS ——1—2 Ⓑ

INSIDE REGION EXPOSURE MODE
SETTING MEANS ——1—3

NON—EXPOSURE MODE SETTING MEANS
(HOLLOW MODEL) ——1—3a

WHOLE REGION EXPOSURE MODE
SETTING MEANS (SOLID MODEL) ——1—3b Ⓒ

SPACED EXPOSURE MODE
SETTING MEANS (HONEYCOMB MODEL) ——1—3c Ⓓ

PITCH, LINE WIDTH AND
PATTERN SETTING MEANS ——1—3c1

LEG DATA SETTING MEANS ——1—4 Ⓔ

HEIGHT, PITCH AND LINE WIDTH
SETTING MEANS ——1—4a

KIND(STRIPE, NORMAL CROSS, ALTERNATE CROSS)
SETTING MEANS ——1—4b

OUTLINE PRESENCE/ABSENCE SETTING MEANS ——1—4c

FRAME SPACE SETTING MEANS ——1—5

WHOLE SPACE SETTING MEANS ——1—5a

SPECIFIC SPACE SETTING MEANS ——1—5b Ⓕ

SUPPORT DATA SETTING MEANS ——1—6 Ⓖ

MEANS FOR SETTING PITCH,
LINE WIDTH AND KIND(STRIPE,
NORMAL CROSS, ALTERNATE CROSS)
FOR EVERY HEIGHT ——1—6a Ⓗ

SPACE SETTING MEANS ——1—6b Ⓘ

LOWER WHOLE REGION SETTING MEANS ——1—6b1

OUTSIDE WHOLE REGION SETTING MEANS ——1—6b2 Ⓙ

INSIDE AND OUTSIDE WHOLE REGION
SETTING MEANS ——1—6b3

FIG. 1(A)

13

1-27 ⌐ COMPUTING MEANS

1-7 → TRIANGULAR PATCH TYPE DESIRED MODEL SHAPE DATA STORING MEANS

(A) DATA EDITING MEANS 1-8

(K)

(L)

(B) BEAM SCANNING SPEED COMPUTING MEANS 1-9

HORIZONTAL PLANE EXTRACTING MEANS 1-10

CONTOUR COMPUTING MEANS 1-11

(M)

BEAM CORRESPONDING SOLIDIFYING REGION DATA COMPUTING AND STORING MEANS 1-12

THREE-DIMENSIONAL OFFSET QUANTITY COMPUTING MEANS 1-13

(N)

CONTOUR CORRESPONDING EXPOSURE REGION DATA COMPUTING AND STORING MEANS 1-14

(O)

CONTOUR CORRESPONDING SOLIDIFYING REGION CONTINUITY DETERMINING MEANS 1-15

(C) FORCIBLY ADOPTING MEANS 1-16

(P)

(D)

OFFSET MEANS 1-17

(Q)

INSIDE REGION CORRESPONDING EXPOSURE REGION DATA COMPUTING AND STORING MEANS 1-18

(R)

(E)

LOWERMOST SECTION CORRESPONDING CONTOUR SEARCHING MEANS 1-19

LEG CORRESPONDING EXPOSURE REGION DATA COMPUTING AND STORING MEANS 1-20

MAXIMUM CONTOUR RANGE COMPUTING MEANS 1-21

(F) FRAME CORRESPONDING EXPOSURE REGION DATA COMPUTING AND STORING MEANS 1-22

(G)

(H) REGULAR REGIONS (PATTERNS) DATA COMPUTING AND STORING MEANS 1-23

(I) LOWERMOST CONTOUR PLANE SEARCHING MEANS 1-24

(J) UPPER AND LOWER CONTOUR PLANES SEARCHING MEANS 1-25

SUPPORT CORRESPONDING EXPOSURE REGION DATA COMPUTING AND STORING MEANS 1-26

*FIG. 1(B)*

FIG.1(C)

2-8
DATA EDITING (EXPANSION, CONTRACTION, ROTATION, SHAPE CORRECTION)

2-1
UNIT THICKNESS AND BEAM DIAMETER SETTING

2-50
SIMULATION

2-32
DISPLAYING

2-51
OPERATION OK ?    NO

YES

2-10
HORIZONTAL PLANE EXTRACTING

2-11
CONTOUR COMPUTING

2-13
THEER-DIMENSIONAL OFFSET QUANTITY COMPUTING

2-14
CONTOUR CORRESPONDING EXROSURE REGION DATA COMPUTING AND STORING

2-3
INSIDE REGION EXPOSURE MODE SETTING

2-18
INSIDE REGION CORRESPONDING EXPOSURE REGION DATA COMPUTING AND STORING

Ⓢ

FIG. 2(A)

16

FIG.2(B)

FIG. 3

| PATCH NUMBER | FIRST VERTEX COORDINATE | SECOND VERTEX COORDINATE | THIRD VERTEX COORDINATE |
|---|---|---|---|
| P0 | | | |
| ⋮ | | | |
| P1 | | | |
| ⋮ | | | |
| PI | XI1, YI1, ZI1 | XI2, YI2, ZI2 | XI3, YI3, ZI3 |
| ⋮ | | | |
| PJ | XJ1, YJ1, ZJ1 | XJ2, YJ2, ZJ2 | XJ3, YJ3, ZJ3 |
| ⋮ | | | |
| PK | XK1, YK1, ZK1 | XK2, YK2, ZK2 | XK3, YK3, ZK3 |
| ⋮ | | | |
| PN | XN1, YN1, ZN1 | XN2, YN2, ZN2 | XN3, YN3, ZN3 |

FIG. 4

19

FIG. 5(A)

FIG. 5(B)

FIG. 6

FIG. 7

FIG.8(A)

FIG.8(B)

FIG.8(C)

FIG. 9(A)

FIG. 9(B)

FIG. 9(C)

FIG. 9(D)

FIG. 9(E)

FIG. 9(F)

FIG.10(A)    FIG.10(B)    FIG.10(C)

FIG.10(D)1 FIG.10(D)2  FIG.10(E)    FIG.10(F)

10-13a  10-12a  10-2a
10-11a
10-10
10-11
10-12
10-13
10-14
10-16
10-15

H         H

*FIG. 10(G)*

(1)
10-11a
10-15
10-11
10-14a
10-10a

(2)
10-15  10-12a
10-12
10-14a
10-17
10-10a

(3)
10-13a  10-15
10-13
10-14a
10-18

*FIG. 10(H)*

FIG.11(A)

FIG.11(B) FIG.11(C) FIG.11(D) FIG.11(E)

*FIG.12(A)*

*FIG.12(B)*

12-2

12-2

12-2

12B

12-3

12B

12-3

12B

12-4

12C

12-4

12A

12B

12-4

12-5

12-4

FIG.13(A)     FIG.13(B)     FIG.13(C)

$Z_1$

$Z_0$

14-1

14-2

FIG.14(A)

14-2

14-1

$Z_1$

$Z_0$

FIG.14(B)

FIG.15(A)

FIG.15(B)